# EUROPEAN PATENT APPLICATION

(11) **EP 1 709 864 A1**
(43) Date of publication of application: **11.10.2006**
(21) Application number: 04805110.6
(22) Date of filing: 20.12.2004
(51) Int. Cl.: A01G 25/09, A01G 15/00, A01G 25/00

(54) **RAIN SIMULATOR FOR ENVIRONMENTAL STUDIES**

(30) Priority: 26.12.2003 ES 200302966 U
(71) Applicant: Instituto Madrileno de Investigacion Agraria y Alimentari - IMIA, 28800 Alcala de Henares, Madrid (ES)
(72) Inventor: MARQUES PEREZ, M José, E-Alcala De Henares (Madrid) (ES); ALONSO RODRIGUEZ, Juan, P., E-Alcala De Henares (Madrid) (ES); BIENES ALLAS, Ramón, E-Alcala De Henares (Madrid) (ES)
(74) Representative: Gonzalez Palmero, Fé
(86) International application number: PCT/ES2004/000567
(87) International publication number: WO 2005/063001

(57) **Abstract**

The invention relates to a rain simulator which is used to carry out environmental studies. The inventive simulator is based on a combined structure comprising a fixed part and a mobile part. According to the invention the mobile structure moves from side to side so as to be positioned sequentially over plots of land or surfaces of a determinated width in order to wet same, owing to the fact that tubes bearing sprinklers or nozzles are fixed to the cables forming said mobile structure, said nozzles being supplied by means of a general supply system.

## Description

The present invention relates to a rain simulator for environmental studies, based on a structure with a fixed part and a mobile part to allow the movement of the latter over the areas or surfaces on which rain is to be simulated.

The object of the invention is to provide a system that makes it possible to perform successive simulations of rain on plots of land covering a large area of ground in natural conditions, it being possible to increase the surface area as the mobile part moves.

The simulator of the invention can be applied to the environmental sector, research and land reforestation, erosion and desertification.

### BACKGROUND OF THE INVENTION

It is becoming increasingly important in Spain to study the effects of soil erosion due to the large surface area of degraded land that gradually loses vegetation, organic matter and nutrients.

Plans for revegetation schemes must be based on proven results of water behaviour when it falls on a certain plot of land in particular circumstances, the results obtained thereby depending on the weather, which means depending on phenomena that occur randomly in time and are extremely varied in terms of their intensity, duration, kinetic energy, etc.

The ability to simulate rain makes it possible to choose the intensity of the rain and carry out an unlimited number of repeat tests, thus providing reliable data regarding the erosion processes being studied.

The use of rain simulation dates back to the 1930s, although the systems that are used have evolved over time and have been adapted to the resources and objectives of each project,being used to study theresponse of soils and/or vegetation and the impact of a rainy spell of a specific intensity.

Said systems are based on the use of water stored in a tank, which falls due to gravity or is pumped towards a set of nozzles or sprinklers to simulate rain from a certain height above the surface of the land to be studied, the dimensions of said equipment being conditioned by the surface to be tested.

There is an extensive bibliography with regard to simulators that simulate rain on small plots of land or soil trays of up to 0.5 m², but there are fewer references regarding equipment for areas of more than 1 m² and very few that are capable of simulating rain on plots of more than 10 m².

In these cases, the most common design is of the sprinkler type, i.e. a column resting on the ground, the top whereof has a nozzle that diffuses the water throughout a 360° range, directing the water upwards so that it falls to the ground when the pressure that is expelled from the nozzle is counteracted by the force of gravity.

There are few rain simulation systems using diffusers directed towards the ground that cover surfaces of more than 50 m², although some large models are installed inside industrial premises, meaning that the soil samples have to be taken to the simulator with the consequent alterations that this involves.

### DESCRIPTION OF THE INVENTION

The rain simulator proposed herein has been designed to solve the above-described problems, as it makes it possible to wet much larger surfaces of land, for which the simulator has been designed with a fixed structure or part and a mobile structure that moves so that that it is successively situated over one plot of land after the other, thus covering a large surface of land depending on the length of movement of the mobile part or structure.

More specifically, the simulator of the invention constitutes what could be considered a mixed structure with a fixed part determined by two parallel rows or lines of posts duly anchored to the ground and suitably braced, those of each line being joined together by means of a beam, so that situated on each beam there is a guide rail on which the mobile structure can move, this structure consisting of a number of cables that are joined together, with turnbuckles appropriately positioned thereon, and coupled to profiles that are connected to the guide rails established on the beams that fix the two lines of posts, so that between these profiles wherein the cables of the mobile structure end and the guide rails there is a steel cable ending in a carriage, which is situated inside the guide rails and which can move on the guide rails, so that each carriage is welded to a chain that reaches the ground and which serves to move the whole system or mobile structure from one side to the other, thus situating said mobile structure over plots of land or surfaces of a specific width, which it will wet as a consequence of the fact that the cables constituting the mobile structure are fastened to corresponding pipes that have sprinklers or diffuser nozzles, which are suitably fed by a general supply system.

The system therefore makes it possible to perform successive rain simulations on a large surface of land in natural conditions, it being possible to increase the surface as the mobile structure moves.

The supply of water to the pipes and therefore to the sprinklers or diffuser nozzles on the mobile structure is aided by a boost pump.

The mobile structure, and therefore the pipes and nozzles or sprinklers, are suspended in the air at a certain height from the ground, thus avoiding any obstacles that could alter the dynamics of the water on the surface of the land, which would modify the main objective of the research, in such a way that the height from which the rain is simulated therefore makes it possible to test the effect of medium-high vegetation, such as bushes or trees of up to 2 metres high, logically depending on the height of the posts and the height at which the cables that support the pipes and nozzles or sprinklers are situated.

As has been mentioned above, it is possible to extend the length of the simulator or system as far as necessary, adding all the vertical posts that are required, whereby the design of the structure with the system of mobile carriages suspended on rails at a height make it easier to use by keeping it free from obstructions by soil and mud particles, which would be the case if the carriages were at ground level.

Finally, the existence of the independent pipes with nozzles of different characteristics provides great flexibility of the rains to be simulated, as it would even be possible for them to simultaneously have different size diameters, making the simulation more similar to rain in natural conditions.

### DESCRIPTION OF THE DRAWINGS

To complement this description and in order to aid a better understanding of the invention's characteristics, according to a preferred practical embodiment of the invention, there is a set of illustrative and non-limiting drawings integral to said description, which are as follows:
- Figure 1: shows a schematic drawing according to a general perspective of the rain simulator for environmental studies in an embodiment according to the object of the present invention.
- Figure 2: shows a plan view of the simulator above a surface that is divided into ten plots of land, so that the mobile structure will move over each of them, wetting each of the plots or sectors.
- Figure 3: shows a detail of the end of each of the cables on the mobile structure of the simulator, and the way in which they are attached to the vertical posts and connected to the water supply system.

### PREFERRED EMBODIMENT OF THE INVENTION

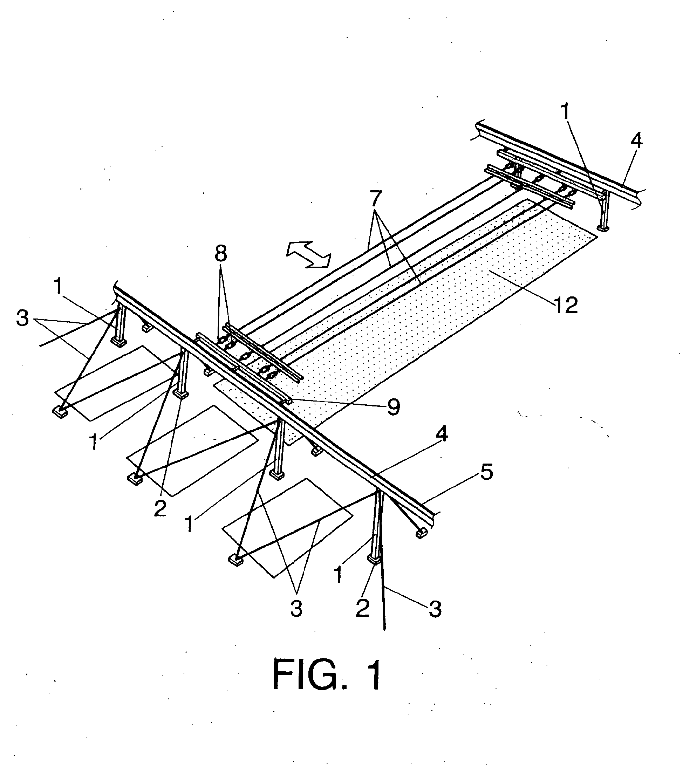

In view of these figures, it can be observed that the simulator of the invention comprises two parallel lines of posts (1) that are duly anchored to the ground on corresponding footings (2), these posts (1) also being braced by corresponding steel cables (3) to form a fixed structure together with the beams (4) that join together the top of each of the lines of posts (1), as shown in figure 1.

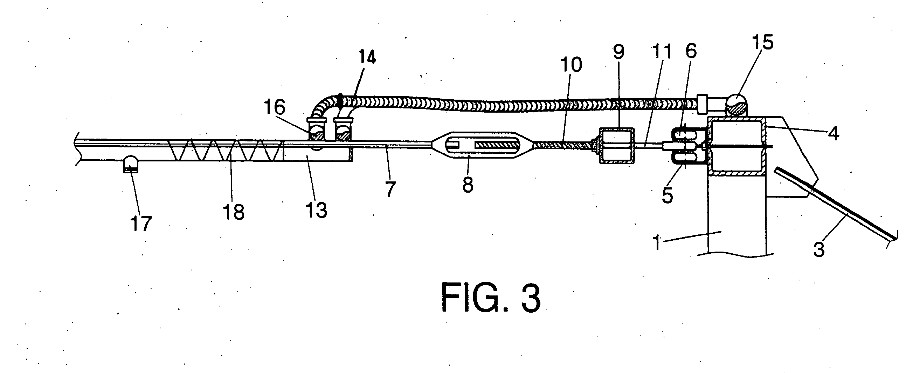

There is, in turn, a profile (5) integral to each of the two beams (4) of said fixed structure, which forms a sliding guide rail for a carriage (6). This forms part of the mobile structure, which consists of a number of steel cables (7) with a turnbuckle (8) that is connected to a profile or longitudinal beam (9) by a section of cable (10), in such a way that the cable (7), when assembled with the turnbuckle (8) and the section of cable (10), is coupled to the track or guide rail (5) on the beams (4) by means of a steel cable (11) that ends in said carriages (6), which can move along the guide rails (5), as shown in figure 3.

The turnbuckle (8) of each cable (7) allows its tautness to be regulated according to the user's needs, interests and wishes.

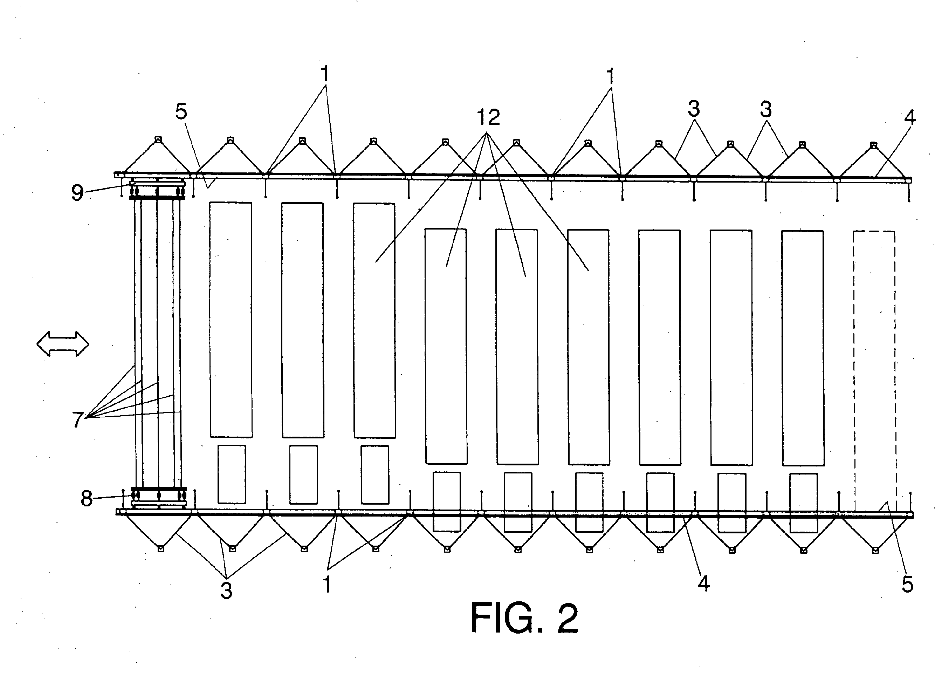

The described structure or simulator that it constitutes is positioned over the surface of a plot of land, as shown in figure 2, with the possibility of increasing this surface by simply adding more posts (1), and on which surface or land a number of plots or sectors (12) has been provided, over which the mobile structure will move, wetting each of these sectors or plots (12), as the cables (7) constitute supports for pipes (13) that are supplied with water through hoses (14) from a general supply pipe (15), as shown in figure 3, there being flexible coupling sleeves (16) between the supply pipe (14) and the pipe (13) containing neck members (17) as support for corresponding water diffuser nozzles or sprinklers, the pipes (13) being secured on the corresponding cables (7) by means of fasteners, helicoidal tape (18) or any other appropriate system.

Figure 1 shows the direction in which the mobile structure moves and, therefore, the position that said structure can occupy in relation to each of the plots (12) that it is to wet by performing the rain simulation for environmental studies, the mobile structure being moved manually or be a motor-driven means, the cables (7) and therefore the pipes (13) and their corresponding sprinklers or diffuser nozzles being suspended in the air in any case, since said mobile structure is positioned on the top of the vertical posts (1), which could be 4 metres high, for example.

## Claims

1. Rain simulator for environmental studies, designed to produce artificial rain through sprinklers or diffuser nozzles over the surface of a plot of land and to allow behavioural studies to be carried out on said wet land, **characterised in that** it consists of a structure with a fixed part and a mobile part that can move over the land to be studied, with the particularity that the fixed part consists of two parallel lines of posts that are suitably anchored to the ground, the upper ends whereof are integrally joined to guide rails along which the mobile part of the structure can slide, this mobile structure or part consisting of a number of cables that end in carriages disposed on the guide rails to slide thereon, said cables constituting corresponding supports for pipes with the diffuser nozzles or sprinklers that direct the water vertically towards the ground, allowing the movement of said mobile part and the corresponding wetting of successive sections of the land to be studied.

2. Rain simulator for environmental studies, according to claim 1, **characterised in that** the different cables of the mobile structure or part each have a turnbuckle for the appropriate tautening of the respective cable.

3. Rain simulator for environmental studies, according to the previous claims, **characterised in that** the pipes that contain the diffuser nozzles or sprinklers are secured to the cables by means of fasteners, helicoidal tapes or any other appropriate element.

4. Rain simulator for environmental studies, according to the previous claims, **characterised in that** the pipes with the diffuser nozzles or sprinklers are connected by a hose to the general water supply pipe, and connected to the corresponding diffuser nozzle or sprinkler pipe by a coupling sleeve.

5. Rain simulator for environmental studies, according to the previous claims, **characterised in that** the vertical posts are anchored to the ground on concrete footings, being secured by bracings that are suitably anchored to the ground.
